# EUROPÄISCHE PATENTSCHRIFT

(11) **EP 3 140 139 B1**
(45) Veröffentlichungstag und Bekanntmachung des Hinweises auf die Patenterteilung: **09.01.2019**
(21) Anmeldenummer: 15715251.3
(22) Anmeldetag: 09.04.2015
(51) Int. Cl.: B60G 17/08, B60G 17/018, B60G 17/0165

(54) **DÄMPFUNGSSTEUERUNGSANORDNUNG FÜR ADAPTIVE FAHRWERKSDÄMPFER**
DAMPING CONTROL ARRANGEMENT FOR ADAPTIVE CHASSIS DAMPERS
ENSEMBLE DE COMMANDE D'AMORTISSEMENT POUR AMORTISSEURS DE CHÂSSIS ADAPTATIFS

(30) Priorität: 05.05.2014 DE 102014208323
(43) Veröffentlichungstag der Anmeldung: 15.03.2017
(73) Patentinhaber: Bayerische Motoren Werke Aktiengesellschaft, 80809 München (DE)
(72) Erfinder: MUNZINGER, Nathan, 80797 München (DE); PELLER, Martin, 81825 München (DE)
(86) Internationale Anmeldenummer: PCT/EP2015/057686
(87) Internationale Veröffentlichungsnummer: WO 2015/169530

(56) Entgegenhaltungen:
- DE-A1- 19 922 745
- DE-A1-102008 052 999
- DE-A1-102009 021 671
- DE-A1-102012 016 573
- FR-A1- 2 899 844
- US-A- 5 200 895
- US-A- 5 390 121
- US-A1- 2012 053 789

## Beschreibung

Die vorliegende Erfindung betrifft eine Dämpfungssteuerungsanordnung eines Fahrzeugs nach dem Oberbegriff des Anspruchs 1 und geht aus von der US 5 390 121 A. Dieser und ähnlicher Stand der Technik, bspw. nach DE 199 22 745 A1 oder DE 10 2009 021 671 A1 oder US 2012/053789 A1 beschreiben sog. adaptive Dämpfer im Fahrwerk von Fahrzeugen, deren Betriebsverhalten bzw. Dämpfungscharakteristik veränderbar ist und wobei insbesondere drei verschiedene Dämpfungs-Kennlinien auswählbar sind.

Dämpfersysteme für ein Fahrzeug umfassen üblicherweise eine Dämpfereinheit mit einem Zylinder und einem darin geführten Kolben. Der Zylinder ist mit Hydrauliköl gefüllt. Durch den Kolben wird das Zylindervolumen in mindestens zwei Volumina geteilt. Bei einem adaptiven Dämpfersystem kann die Strömungscharakteristik des Hydrauliköls beim Wechsel zwischen den beiden Volumina angepasst werden. Bei aktiven Dämpfersystemen können nahezu beliebige Zustände zwischen einer durch das Dämpfersystem ausgeführten Bewegung (Geschwindigkeit) und einer durch das Dämpfersystem ausgeübten Kraftwirkung erzeugt werden. Hierzu sind aktive Dämpfersysteme mit einer Pumpe und einer elektrischen Maschine versehen. Die Dämpfereinheit ist üblicherweise zwischen einer Karosserie und einem Rad des Fahrzeuges angeordnet. Um kurze Reaktionszeiten und ein hohes Maß an Ausfallsicherheit zu ermöglichen, werden im Stand der Technik nahe an einem Dämpfer angeordnete Aktuatoranordnungen vorgeschlagen. Üblicherweise werden diese Aktuatoranordnungen von einem zentralen Steuergerät des Fahrzeugs geeignet angesteuert.

Vorliegend soll nun aufgezeigt werden, wie eine adaptive Dämpfungssteuerungsanordnung nach dem Oberbegriff des Anspruchs möglichst betriebssicher gestaltet werden kann und dennoch flexibel und schnell auf jeweils vorliegende Anforderungen reagieren kann (= Aufgabe der Erfindung).

Die Lösung dieser Aufgabe ergibt sich mit den Merkmalen des Anspruchs 1; vorteilhafte Weiterbildungen sind Inhalt der Unteransprüche.

Es ist jeder Aktuatoranordnung und somit jedem der adaptiven Dämpfer des Fahrzeugs - üblicherweise weisen bspw. Personenkraftwagen zwei oder vier adaptive Dämpfer auf - ein Dateneingang und ein Datenspeicher zugeordnet, d.h. jede räumlich nahe des jeweiligen Dämpfers angeordnete Aktuatoranordnung kann selbstständig Signale für die adaptive Dämpfungsfunktion generieren beziehungsweise verändern. Die Signale werden beispielsweise im Ansprechen auf Fahrzeug- und Umgebungsdaten, welche durch eine entsprechende Sensorik erfasst werden, generiert. Anschließend können entsprechende Kräfte für jedes Fahrzeugrad unabhängig errechnet und gegebenenfalls aktiv eingestellt werden. Auch die Geschwindigkeit des Dämpfungsvorgangs wird sensorisch erfasst und bei der Einstellung der adaptiven Dämpfung berücksichtigt. Das Übertragungsverhalten des Dämpfers kann als Kraft-Geschwindigkeits-Kennlinie beschrieben werden. Eine Anpassung des Dämpfungsverhaltens bedeutet somit stets auch eine Anpassung der Kennlinie.

Damit ist an jedem Fahrwerksdämpfer eine Grundfunktionalität zur Bereitstellung einer adaptiven Fahrwerksdämpfung bereitgestellt, ohne dass es hierzu einer Datenkommunikation mit dem Fahrzeugbordnetz bedarf. Auch bei einem Ausfall eines Kommunikationspfades bleiben gewisse Grundfunktionsumfänge der Aktuatoranordnung somit erhalten. Erfindungsgemäß umfasst die Aktuatoranordnung einen Dateneingang, einen Datenspeicher und einen Aktuator zur Anpassung eines Betriebsverhaltens des Dämpfers. Der Datenspeicher hält mindestens eine erste Anzahl Kennlinien zur Festlegung des Betriebsverhaltens, welches auch als Übertragungs- oder Dämpfungsverhalten des Dämpfers verstanden werden könnte, des Dämpfers bereit. Die Kennlinien können beispielsweise als Kraft-Geschwindigkeits-Kennlinien des Dämpfers ausgestaltet sein. Sie könnten auch als "Soll"-Kennlinien für den Dämpfer verstanden werden. Die erste Anzahl Kennlinien stellt einen Grundfunktionsumfang der Aktuatoranordnung sicher, welchen diese auch ohne die vorgenannte Kommunikation mit dem Fahrzeugbordnetz bereitstellen kann. Im Ansprechen auf ein über den Dateneingang erhaltenes erstes Signal kann der Aktuator eine zweite, nicht für den Grundfunktionsumfang definierte Kennlinie zur Festlegung eines alternativen Betriebsverhaltens realisieren. Mit anderen Worten ist die zweite Kennlinie bis zum Erhalt des ersten Signals nicht in dem Datenspeicher beziehungsweise in der Aktuatoranordnung vorhanden. Die zweite Kennlinie könnte auch als über das erste Signal angepasstes Betriebsverhalten, als "Sollvorgabe", als "Sollkraftvorgabe", als "Sollkraftanforderung", als "Soll-Geschwindigkeits"-Vorgabe oder als "Soll-Weg"-Vorgabe bezeichnet werden, mittels welcher der im Aktuator enthaltenen Logik eine übergeordnete Vorgabe zum Betriebsverhalten des Dämpfers zugeordnet werden kann. Auf diese Weise kann eine außerhalb der Aktuatoranordnung angeordnete Logik beziehungsweise Recheneinheit eine Optimierung des Dämpfungsverhaltens des Fahrwerksdämpfers vornehmen und der erfindungsgemäßen Aktuatoranordnung über den Dateneingang zuweisen. Beispielsweise können somit umfangreiche Informationen und/oder Anwenderwünsche bei der Anpassung des Fahrwerksdämpfers berücksichtigt werden.

Die zweite Kennlinie kann beispielsweise vollständig außerhalb der Aktuatoranordnung erstellt und über den Dateneingang vom Aktuator empfangen werden. Mit anderen Worten wird eine vollständige Definition der zweiten Kennlinie in die Aktuatoranordnung geladen. Dies ermöglicht eine umfangreiche Anpassung des Dämpfungsverhaltens.

Alternativ kann die zweite Kennlinie auf Basis einer Kennlinie der ersten Anzahl Kennlinien erzeugt werden. Beispielsweise kann die erste Kennlinie entsprechend einem dem ersten Signal zugeordneten Faktor gestreckt oder gestaucht werden. Eine solche Anpassung der ersten Kennlinie könnte auch als "Skalierung" der ersten Kennlinie bezeichnet werden. Hierdurch kann eine zu kommunizierende Datenmenge gering gehalten werden, wodurch die Ansprechzeiten und die Kommunikationslast des verwendeten Mediums gering gehalten werden.

Die vorgeschlagene Architektur für ein adaptives Fahrwerksdämpfersystem sieht vor, dass die Aktuatoranordnung eingerichtet ist, ein Signal zur Priorisierung unterschiedlicher Kennlinien von einer externen Instanz zu erhalten. Mit anderen Worten kann ein zweites Signal durch die Aktuatoranordnung ausgewertet werden, im Ansprechen auf welches die zweite Kennlinie unverändert oder gar nicht durch die Aktuatoranordnung beziehungsweise den ihr zugeordneten Fahrwerksdämpfer realisiert wird. Sofern die zweite Kennlinie unverändert zu verwenden ist, wird die erste Anzahl Kennlinien nicht berücksichtigt. Alternativ kann die zweite Kennlinie verworfen werden, im Ansprechen worauf eine Kennlinie der ersten Anzahl Kennlinien das Übertragungsverhalten des Fahrwerksdämpfers bestimmt. Alternativ sind sämtliche Mischformen der beiden vorgenannten Extrema möglich, indem beispielsweise ein arithmetischer oder geometrischer Mittelwert der ersten Kennlinie und der zweiten Kennlinie veranschlagt wird. Alternativ kann eine durch die zweite Kennlinie definierte Kraftwirkung zu einer durch die erste Kraftlinie definierten Kraftwirkung hinzuaddiert werden. Ebenso ist eine Maximal- beziehungsweise Minimalwertbetrachtung möglich, wonach der aus den Kennlinien jeweils hervorgehende Maximalwert beziehungsweise Minimalwert für eine jeweilige Dämpfergeschwindigkeit herangezogen wird.

Nun wird eine Dämpfungssteuerungsanordnung für adaptive Fahrwerksdämpfer vorgeschlagen, welche mehrere, Aktuatoranordnungen umfasst, wie sie vorstehend beschrieben sind. Zusätzlich umfasst die Dämpfungssteuerungsanordnung ein mit beiden Aktuatoranordnungen informationstechnisch verbundenes Steuergerät. Beispielsweise kann ein Fahrzeugbus (z.B. CAN, FlexRay) zur informationstechnischen Anwendung des Steuergerätes an die Aktuatoranordnungen verwendet werden. Das Steuergerät ist eingerichtet, das erste Signal und/oder das zweite Signal an den Dateneingang der Aktuatoranordnungen zu senden, um die zweite Kennlinie zu definieren. Auf diese Weise ist die erfindungsgemäße Dämpfungssteuerungsanordnung eingerichtet, die vorstehend beschriebenen Merkmale, Merkmalskombinationen und die sich aus diesen ergebenden Vorteile der erfindungsgemäßen Aktuatoranordnungen zu realisieren.

Die Dämpfungssteuerungsanordnung kann an eine Vielzahl zusätzlicher Informationsquellen innerhalb des Fahrzeugbordnetzes angebunden sein, welche mitunter höhere Latenzzeiten aufweisen, als die Kommunikation innerhalb der erfindungsgemäßen Aktuatoranordnungen. Geeignete Sensorsignale für die Fahrzustandsaufbereitung sind zudem: Radbeschleunigungen (RB, 4 Sensoren), Höhenstände (HS, 4 Sensoren), Dombeschleunigungen (DB, 4 Sensoren), Aufbaubeschleunigung und - Drehraten (SC, 1 Sensor 6-achsig). Mögliche Kombinationen sind in diesem Zusammenhang RB/HS/SC oder RB/DB/SC oder RB/HS. Diese Sensorinformation ist insbesondere wichtig für die äußere Sollkraftvorgabe, die abweichend vom Aktorgrundverhalten situationsspezifisch und gesamtfahrzeugmäßig eingreift (Aufbauschwingverhalten, Wankdynamik). Die vorgenannten Sensoren bzw. Sensorinformationen können sämtlich alternativ oder in beliebigen für den Einsatzzweck geeigneten Kombinationen verwendet werden.

Erfindungsgemäß soll auf diese Weise ein drittes Signal eines Sensors zur Erkennung einer Fahrbahnoberflächenbeschaffenheit (z. B. eine Kamera, ein Abstandssensor auf LIDAR- oder Ultraschallbasis) ausgewertet werden, um anschließend voneinander unterschiedliche erste Signale an die Aktuatoranordnungen zu versenden. Auf diese Weise kann eine bestmögliche und vorausschauende Anpassung der Fahrwerksdämpfung an zukünftig mit einzelnen Rädern in Kontakt stehende Fahrbahnteilflächen erfolgen. Für den Fall einer Fehlfunktion des Steuergerätes oder einer Kommunikationsverbindung mit den Aktuatoranordnungen bleibt der durch die Anzahl erster Kennlinien definierte Grundfunktionsumfang innerhalb der Aktuatoranordnungen erhalten. Hierbei wird erfindungsgemäß nicht ausgeschlossen, dass die Aktuatoranordnungen unabhängig vom Steuergerät der Dämpfungssteuerungsanordnung zusätzliche und/oder redundante Signale erhalten, auf Basis welcher eine der ersten Kennlinien aktiviert werden kann.

Über den genannten Dateneingang kann weiterhin eine Anwendereingabe an die erfindungsgemäße Aktuatoranordnung kommuniziert werden, durch welche eine erste Kennliniencharakteristik (z. B. eine komfortable Einstellung), eine zweite Kennliniencharakteristik (z. B. eine normale Einstellung) oder eine dritte Kennliniencharakteristik (z. B. eine sportliche Einstellung) durch die Aktuatoranordnung realisiert werden. Die hierzu vorgenommene Anwendereingabe kann beispielsweise über einen berührungsempfindlichen Bildschirm oder einen sogenannten Fahrerlebnisschalter als Anwenderschnittstelle entgegengenommen werden. Alternativ oder zusätzlich kann die jeweilige Kennliniencharakteristik im Ansprechen auf das Erkennen eines bevorstehenden Fahrmanövers (z. B. eine Kurvenfahrt mit vergleichsweiser hoher Geschwindigkeit) an die erfindungsgemäße Aktuatoranordnung kommuniziert werden. Auf diese Weise kann eine umfassende Anpassung des Dämpfungsverhaltens eines Fahrzeuges durch in dem Fahrzeug vorliegende Informationen erfolgen. Auch die erfindungsgemäße Dämpfungssteuerungsanordnung kann folglich eine Anwendereingabe empfangen, im Ansprechen auf welche eine vom Anwender favorisierte Nachgiebigkeit der Dämpfungscharakteristik realisiert wird. Beispielsweise können die Dämpfungscharakteristika "sportlich", "normal" oder "komfortabel" ausgewählt und korrespondierende Kennlinien oder Parameter an die erfindungsgemäßen Aktuatoranordnungen gesendet werden. Auch bezüglich der Kennliniencharakteristika kann innerhalb der Aktuatoranordnungen eine Bewertung der ersten, zweiten und dritten beziehungsweise vierten, fünften und sechsten Kennliniencharakteristik erfolgen, sodass eine vom Steuergerät erhaltene Kennliniencharakteristik entweder verworfen, unverändert oder unter Berücksichtigung einer innerhalb der Aktuatoranordnung bereits vorhandenen Kennliniencharakteristik appliziert wird.

Weitere Einzelheiten, Merkmale und Vorteile der Erfindung ergeben sich aus der nachfolgenden Beschreibung und den Figuren. Es zeigen:
- Figur 1: eine schematische Draufsicht auf Komponenten eines Ausführungsbeispiels eines Fahrzeugs mit einem Ausführungsbeispiel einer erfindungsgemäßen Dämpfungssteuerungsanordnung;
- Figur 2: eine Detailansicht veranschaulichend Komponenten eines Ausführungsbeispiels einer erfindungsgemäßen Aktuatoranordnung; und
- Figur 3: eine Veranschaulichung von Signalflüssen innerhalb eines Ausführungsbeispiels einer erfindungsgemäßen Dämpfungssteuerungsanordnung.

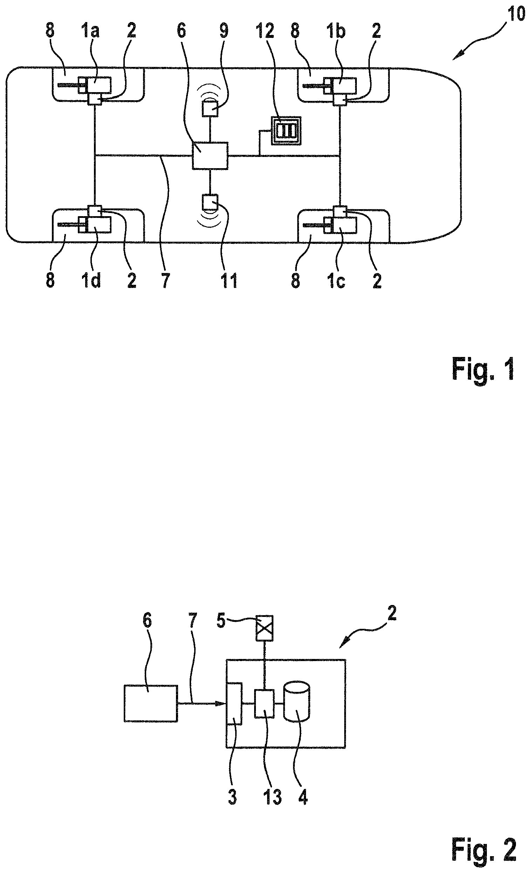

Figur 1 zeigt ein Fahrzeug 10 mit vier Rädern 8, welche jeweils über Fahrwerksdämpfer 1a, 1b, 1c, 1d aufgehängt sind. Die Fahrwerksdämpfer 1a, 1b, 1c, 1d weisen jeweilige Aktuatoranordnungen 2 auf, welche über einen FlexRay-Bus 7 mit einem Steuergerät 6 einer Dämpfungssteuerungsanordnung informationstechnisch verbunden sind. An dem Steuergerät 6 sind vier Radbeschleunigungssensoren (nicht dargestellt), vier Höhenstandssensoren (nicht dargestellt), vier Dombeschleunigungssensoren (nicht dargestellt), ein Sensorcluster im Fahrzeugschwerpunkt (nicht dargestellt) und ein Sensor zur Erkennung der Bodenunebenheiten 11 angeschlossen. Über einen Bildschirm 12 können Anwendereingaben bezüglich eines gewünschten Fahrwerksverhaltens empfangen und über das Steuergerät 6 empfangen, verarbeitet und an die Aktuatoranordnungen 2 kommuniziert werden.

Figur 2 zeigt eine schematische Detailansicht einer Aktuatoranordnung 2, welche über ein mittels eines FlexRay-Busses 7 informationstechnisch mit einem Steuergerät 6 einer Dämpfungssteuerungsanordnung angeschlossen ist. Über den FlexRay-Bus 7 gesendete Daten werden durch einen Dateneingang 3 empfangen und in einer Auswerteeinheit 13 verarbeitet. Für die Verarbeitung können innerhalb eines Datenspeichers 4 abgespeicherte erste Kennlinien herangezogen werden, auf Basis welcher die Ansteuerung eines Aktuators 5 angepasst wird. Der Aktuator 5 kann beispielsweise als hydraulisches Ventil zur Anpassung eines Übertragungsverhaltens eines Fahrwerksdämpfers (in Figur 1 Bezugszeichen 1a, 1b, 1c, 1d) ausgestaltet sein.

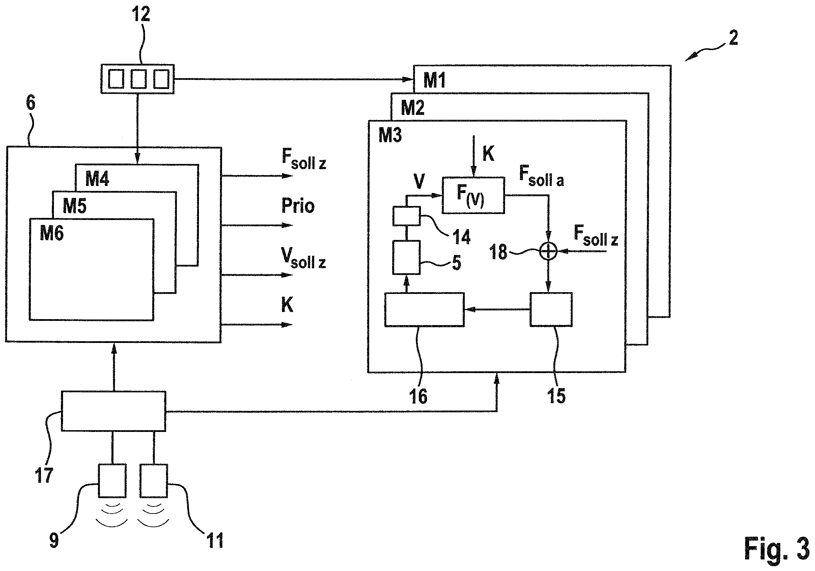

Figur 3 veranschaulicht die Kommunikation beziehungsweise das Regelverhalten innerhalb eines Ausführungsbeispiels einer erfindungsgemäßen Dämpfungssteuerungsanordnung. Über einen Bildschirm 12 wählt der Anwender eine Kennliniencharakteristik M1, M2, M3 innerhalb einer Aktuatoranordnung 2 beziehungsweise M4, M5, M6 innerhalb eines Steuergerätes 6 einer Dämpfungssteuerungsanordnung. Zusätzlich werden die Signale von vier Radbeschleunigungssensoren, vier Höhenstandssensoren, vier Dombeschleunigungssensoren, eines Sensorclusters im Fahrzeugschwerpunkt und eines Sensor zur Erkennung der Bodenunebenheiten durch ein Steuergerät 17 zur kommunalen Signalaufbereitung empfangen und an das Steuergerät 6 sowie die Aktuatoranordnung 2 übermittelt. Das Steuergerät 6 stellt einen Kraftsollwert F_{soll z}, einen Geschwindigkeitssollwert V_{soll z}, und einen Skalierungsfaktor K bereit, welche innerhalb der Aktuatoranordnung 2 wie nachstehend beschrieben verwendet werden. Zusätzlich wird eine Priorisierungsvorgabe Prio bereitgestellt, über welche das Steuergerät 6 einen Vorschlag zur Handhabung der übermittelten Daten unterbreitet. Innerhalb der Aktuatoranordnung 2 wird von einem Geschwindigkeitssensor 14 ein Geschwindigkeitssignal V ausgewertet und entsprechend einem Skalierungsfaktor K in einen aktuatorspezifischen Kraftsollwert F_{soll a} überführt. Der Kraftsollwert F_{soll a} wird mit einem zentralen Kraftsollwert F_{soll z} in einem Addierer 18 verarbeitet, dessen Ausgangssignal in eine Regelungseinheit 15 geführt wird. Aus der Regelungseinheit 15 wird ein Steuersignal für einen elektrischen Motor 16 generiert, über welchen ein Aktuator 5 in Form eines elektromagnetischen Ventils oder einer Hydraulikpumpe in Verbindung mit einem Elektromotor zur Anpassung des Übertragungsverhaltens des Fahrwerksdämpfers angesteuert wird.

Es ist eine zentrale Ansteuerung vorgesehen und es sind die verschiedenen Regleranteile für die unterschiedlichen Regleraufgaben getrennt. Die zentrale Steuerung übernimmt dabei die Aufbauführung (Stabilisierung der Karosserie) und die Wankstabilisierung, ist aber auch um andere Funktionen erweiterbar. Zum Beispiel ist ein Sensor-Kamerasystem zum Analysieren der Fahrbahn vor dem Fahrzeug integrierbar (sogenannter "Preview"). Auf diese Weise kann der bevorstehende Fahrbahnverlauf erkannt und jeder Dämpfer vorausschauend angesteuert werden.

Ferner verfügt das System über eine aktuatorgebundene Steuerung zum Regeln der jeweiligen Dämpfer. Der aktuatorgebundene Regelkreis übernimmt die Radführung. Er wird im Wesentlichen durch eine frei formbare, von außen applizierbare Kraft-Geschwindigkeits-Kennlinie (definierend das Übertragungsverhalten des Fahrwerksdämpfers) erweitert, welche das Grundverhalten des Aktuators darstellt.

Die zentrale Steuerung verwendet wesentliche Fahrzeug- und Sensorgrößen, um daraus situationsbedingt einen passenden Sollwert für die Kraft und/oder den Geschwindigkeitswert des Dämpfers zu bestimmen. Die Situation wird hierbei durch die Fahrbahnbeschaffenheit beziehungsweise die Betriebssituation des Fahrzeugs bestimmt. Der jeweilige Sollwert wird anschließend mittels eines Bussystems (z. B. bei einem Takt von 400 Hz) an die aktuatorgebundene Steuerung übergeben. Damit kann die zentrale Steuerung jederzeit maßgeblich die Aktuatorstellkräfte beziehungsweise die Sollbewegung des Aktuators beeinflussen. Eine Aufbauführung oder Wankstabilisierung kann dabei durch eine aktive Beeinflussung der Kraftschnittstelle erreicht werden. Eine äußere Sollvorgabe aufgrund von vorausliegenden Bodenunebenheiten kann ebenfalls über die Sollgeschwindigkeitsschnittstelle erfolgen.

Es sind die zentrale Steuerung und die aktuatorgebundene Steuerung durch eine Fahrmodus- oder eine Parameterwahl erweitert. Dabei kann der Fahrzeugführer durch ein manuelles Eingabeelement, beispielsweise zwischen den Modi "Komfort+", "Komfort", "Eco" oder "Sport" unterscheiden. Je nach Modus werden dann die Kennwerte anders gewählt und damit die Kraft-Geschwindigkeits-Kennlinie weiter beeinflusst. Durch eine "kommunale Signalaufbereitung" wird vor allem die zentrale Steuerung mit den relevanten Messwerten versorgt. Dennoch sollen dem Aktuator für die verschiedenen Fahrmodi die Sensor- und Fahrzeugsignale ebenfalls zur Verfügung stehen. Diese sind jedoch nicht zwingend für dessen Betrieb notwendig.

Nach der Bestimmung des Verlaufes der Kraft-Geschwindigkeits-Kennlinie kann über die Skalierung zusätzlicher Einfluss auf die Form der Kennlinie genommen werden. Beispielsweise durch die Multiplikation mit einem vorgegebenen Wert aus der zentralen Steuerung ist die Kennlinie skalierbar.

Es ist die Kraft-Geschwindigkeits-Kennlinie in der aktuatorgebundenen Steuerung von außen applizierbar und stellt ein Grundverhalten des Fahrzeug-Schwingverhaltens dar. Durch den Einsatz einer zentralen Steuereinheit und die Auftrennung der Regler nach ihren Einsatzzwecken ist das Fahrzeug in der Lage, sich situationsbedingt besser an die Vorlieben des Fahrers anzupassen. Dabei steigert die manuelle Fahrmoduswahl das Fahrerlebnis für den Fahrzeugführer. Durch die Aktuatorregelung auf unterster Ebene (am Dämpfer) ist das System jedoch weiterhin in der Lage, auch bei einem Ausfall oder einem Fehler der zentralen Steuerung oder einer Kommunikation der zentralen Steuerung mit der aktuatorgebundenen Steuerung sicher zu regeln. Zum Beispiel kann die Aktuatorsteuerung beim Entfall eines wichtigen Eingangssignals oder bei einer kritischen Dämpferleistung und Temperaturerhöhung selbstständig und automatisch degradieren.

Über die Skalierung und die vorgegebenen Werte für die Dämpferkraft und die Dämpfergeschwindigkeit besteht weiterhin die Möglichkeit, die Kraft-Geschwindigkeits-Kennlinie völlig frei zu verformen und auf diese Weise optimal anzupassen. Die Art der Priorisierung bezüglich der Verwendung zentraler oder dezentraler Vorgaben bietet dabei eine sichere und einfache Möglichkeit zur Übermittlung der Daten.

### Bezugszeichenliste:

- 1a, 1b, 1c, 1d: Fahrwerksdämpfer
- 2: Aktuatoranordnung
- 3: Dateneingang
- 4: Datenspeicher
- 5: Aktuator
- 6: Steuergerät
- 7: FlexRay
- 8: Rad
- 9: Beschleunigungssensor
- 10: PKW
- 11: Lidar-Sensor
- 12: Bildschirm
- 13: Auswerteeinheit
- 14: Geschwindigkeitssensor
- 15: Dämpfungsregelung
- 16: Elektromotor
- 17: Steuergerät zur kommunalen Signalaufbereitung
- 18: Addierer
- F: Kraft
- V: Geschwindigkeit
- K: Faktor
- M1, M2, M3, M4, M5, M6: Kennliniencharakteristika
- Prio: Signal zur Priorisierung

## Patentansprüche

1. Dämpfungssteuerungsanordnung für adaptive Fahrwerksdämpfer (1a, 1b, 1c, 1d) eines Fahrzeugs mit jeweils einer Aktuatoranordnung (2), wobei jede Aktuatoranordnung räumlich nahe einem der Fahrwerksdämpfer angeordnet ist, wobei jede Aktuatoranordnung einen Aktuator (5) zur Anpassung eines Betriebsverhaltens des Dämpfers (1a, 1b, 1c, 1d) sowie einen Dateneingang (3) und einen Datenspeicher (4) umfasst, der mindestens eine erste Anzahl Kennlinien für das Betriebsverhalten des Dämpfers (1a, 1b, 1c, 1d) enthält, und wobei jeder der Aktuatoren eingerichtet ist, im Ansprechen auf ein über seinen einen Dateneingang (3) erhaltenes erstes Signal ein nicht durch die erste Anzahl von Kennlinien definiertes Betriebsverhalten des Dämpfers (1a, 1b,1c, 1d) zu realisieren, das eine zweite Kennlinie bildet, indem die zweite Kennlinie unter Verwendung des erhaltenen ersten Signals aus der ersten Anzahl von Kennlinien in der Aktuatoranordnung erzeugt wird,
**dadurch gekennzeichnet, dass** zwei Aktuatoranordnungen (2) eingerichtet sind, ein über den Dateneingang (3) erhaltenes zweites Signal (Prio) auszuwerten und im Ansprechen auf das zweite Signal (Prio) die zweite Kennlinie entweder unverändert oder gar nicht oder unter Berücksichtigung einer der ersten Anzahl Kennlinien zu verwenden,
und wobei weiterhin ein mit beiden Aktuatoranordnungen (2) informationstechnisch verbundenes Steuergerät (6) vorgesehen ist, welches eingerichtet ist, das erste Signal und/oder das zweite Signal (Prio) an den Dateneingang (3) der Aktuatoranordnungen (2) zu senden, wobei die Dämpfungssteuerungsanordnung eingerichtet ist, ein drittes Signal eines Sensors zur Erkennung einer Fahrbahnoberflächenbeschaffenheit zu erhalten und im Ansprechen auf das dritte Signal voneinander unterschiedliche erste Signale an die Aktuatoranordnungen (2) zu versenden.

2. Dämpfungssteuerungsanordnung nach Anspruch 1, wobei jeder der Dateneingangen (3) eingerichtet ist, im Ansprechen auf eine Anwendereingabe eine erste oder eine zweite oder eine dritte Kennliniencharakteristik für die zweite Kennlinie zu realisieren, wobei die erste Kennliniencharakteristik ein weicheres Dämpfungsverhalten als die zweite Kennliniencharakteristik und die zweite Kennliniencharakteristik ein weicheres Dämpfungsverhalten als die dritte Kennliniencharakteristik realisiert.

3. Dämpfungssteuerungsanordnung nach einem der Ansprüche 1, 2, wobei das Steuergerät (6) eingerichtet ist, eine Anwendereingabe zu empfangen und im Ansprechen darauf die Aktuatoranordnungen (2) anzuweisen, eine vierte Kennliniencharakteristik oder eine fünfte Kennliniencharakteristik oder eine sechste Kennliniencharakteristik zu realisieren, wobei die vierte Kennliniencharakteristik ein weicheres Dämpfungsverhalten als die fünfte Kennliniencharakteristik und die fünfte Kennliniencharakteristik ein weicheres Dämpfungsverhalten als die sechste Kennliniencharakteristik realisiert.

4. Dämpfungssteuerungsanordnung nach einem der vorangegangenen Ansprüche, wobei jede der Aktuatoranordnungen (2) eingerichtet ist, eine Sollkraftvorgabe und/oder eine Sollsteifigkeit oder eine Soll-Geschwindigkeit für den Dämpfer (1a, 1b, 1c, 1d) als erstes Signal über den Dateneingang (3) zu empfangen.

5. Dämpfungssteuerungsanordnung nach einem der vorangegangenen Ansprüche, wobei jede der Aktuatoranordnungen (2) eingerichtet ist, die zweite Kennlinie durch Skalierung einer Kennlinie der ersten Anzahl Kennlinien zu erzeugen.

## Claims

1. A damping control arrangement for adaptive chassis dampers (1a, 1b, 1c, 1d) of a vehicle, each having an actuator arrangement (2), wherein each actuator arrangement is arranged in the spatial vicinity of one of the chassis dampers, wherein each actuator arrangement contains an actuator (5) for adapting operating behaviour of the damper (1a, 1b, 1c, 1d), and a data input (3) and a data memory (4), which contains at least a first number of characteristic curves for the operating behaviour of the damper (1a, 1b, 1c, 1d), and wherein each of the actuators is designed, in response to a first signal obtained via the data input (3) of said actuators, to implement operating behaviour of the damper (1a, 1b, 1c, 1d) which is not defined by the first number of characteristic curves and which forms a second characteristic curve, the second characteristic curve being produced with use of the obtained first signal from the first number of characteristic curves in the actuator arrangement,
**characterised in that** two actuator arrangements (2) are designed to evaluate a second signal (Prio) obtained via the data input (3) and, in response to the second signal (Prio), to use the second characteristic curve either unchanged or not at all under consideration of one of the first number of characteristic curves, and wherein a control unit (6) connected in terms of information technology to both actuator arrangements (2) is provided, which control unit is designed to send the first signal and/or the second signal (Prio) to the data input (3) of the actuator arrangements (2), wherein the damping control arrangement is designed to obtain a third signal of a sensor for identifying the condition of a roadway surface and, in response to the third signal, to send first signals, different from one another, to the actuator arrangements (2).

2. A damping control arrangement according to claim 1, wherein each of the data inputs (3) is designed, in response to a user input, to implement a first or a second or a third characteristic curve property for the second characteristic curve, wherein the first characteristic curve property implements a softer damping behaviour than the second characteristic curve property, and the second characteristic curve property implements a softer damping behaviour than the third characteristic curve property.

3. A damping control arrangement according to claim 1 or claim 2, wherein the control unit (6) is designed to receive a user input and, in response thereto, to instruct the actuator arrangements (2) to implement a fourth characteristic curve property or a fifth characteristic curve property or a sixth characteristic curve property, wherein the fourth characteristic curve property implements a softer damping behaviour than the fifth characteristic curve property, and the fifth characteristic curve property implements a softer damping behaviour than the sixth characteristic curve property.

4. A damping control arrangement according to any one of the preceding claims, wherein each of the actuator arrangements (2) is designed to receive a desired force specification and/or a desired rigidity or a desired speed for the damper (1a, 1b, 1c, 1d) as first signal via the data input (3).

5. A damping control arrangement according to any one of the preceding claims, wherein each of the actuator arrangements (2) is designed to produce the second characteristic curve by scaling of a characteristic curve of the first number of characteristic curves.

## Revendications

1. Dispositif de commande d'amortissement pour des amortisseurs de châssis, adaptatifs (1a, 1b, 1c, 1d) d'un véhicule comportant chacun un dispositif d'actionneur (2),
- chaque dispositif d'actionneur étant situé à proximité de l'un des amortisseurs de châssis,
- chaque dispositif d'actionneur comportant un actionneur (5) pour adapter le comportement de fonctionnement de l'amortisseur (1a, 1b, 1c, 1d) ainsi qu'une entrée de données (3) et une mémoire de données (4) qui contient au moins un premier nombre de courbes caractéristiques du comportement de fonctionnement de l'amortisseur (1a, 1b, 1c, 1d), et
- chacun des actionneurs est conçu pour réaliser en réponse à un premier signal reçu par son entrée de données (3), le comportement de fonctionnement (1a, 1b, 1c, 1d) défini par le premier nombre de courbes caractéristiques et qui forme une seconde courbe caractéristique en cette seconde courbe caractéristique étant générée avec le premier signal obtenu à partir du premier nombre de courbes caractéristiques dans le dispositif d'actionneur,
**caractérisé en ce que**
deux dispositifs d'actionneurs (2) sont conçus pour exploiter un second signal (Prio) reçu par l'entrée de données (3) et en réponse au second signal (Prio), soit utiliser la seconde courbe caractéristique inchangée ou ne pas l'utiliser, ou soit encore en tenant compte de l'une des premières courbes caractéristiques, et
- en outre, il est prévu un appareil de commande (6) relié en informatique avec l'un des deux dispositifs d'actionneurs (2) et qui est conçu pour émettre le premier signal et/ou le second signal (Prio) vers l'entrée de données (3) des dispositifs d'actionneurs (2),
- le dispositif de commande d'amortissement étant conçu pour obtenir un troisième signal d'un capteur pour reconnaître la caractéristique de surface de la chaussée et en réponse au troisième signal, envoyer des premiers signaux différents au dispositif d'actionneur (2).

2. Dispositif de commande d'amortisseur selon la revendication 1, selon lequel
chaque entrée de données (3) est conçue pour réaliser en réponse à une entrée d'application, une première ou une seconde ou une troisième courbe caractéristique pour la seconde caractéristique,
- la première courbe caractéristique réalisant un comportement d'amortissement plus souple que la seconde courbe caractéristique et la seconde courbe caractéristique réalisant un comportement d'amortissement plus souple que la troisième courbe caractéristique.

3. Dispositif de commande d'amortissement selon l'une des revendications 1 ou 2,
dans lequel
l'appareil de commande (6) est conçu pour recevoir une entrée d'application et en réponse, avertir les dispositifs d'actionneurs (2) qu'une quatrième courbe caractéristique ou une cinquième courbe caractéristique ou une sixième courbe caractéristique sont à réaliser, la quatrième courbe caractéristique ayant un comportement d'amortissement plus souple que la cinquième courbe caractéristique et la cinquième courbe caractéristique a un comportement plus souple que la sixième courbe caractéristique.

4. Dispositif de commande d'amortissement selon l'une des revendications précédentes,
selon lequel
chacun des dispositifs d'actionneurs (2) est conçu pour recevoir :
- une force de consigne et/ou une rigidité de consigne ou une vitesse de consigne pour l'amortissement (1a, 1b, 1c, 1d) comme premier signal par l'entrée de données (3).

5. Dispositif de commande d'amortissement selon l'une des revendications précédentes,
selon lequel
chacun des dispositifs d'actionneurs (2) est conçu pour générer la seconde courbe caractéristique par la mise à l'échelle d'une courbe caractéristique du premier nombre de courbes caractéristiques.
